# FASCICULE DE BREVET EUROPEEN

(11) **EP 0 480 778 B1**
(45) Date de publication et mention de la délivrance du brevet: **12.03.1997**
(21) Numéro de dépôt: 91401842.9
(22) Date de dépôt: 04.07.1991
(51) Int. Cl.: C08G 14/073, C08J 5/24, C08L 61/34, C09J 161/34

(54) **Résine phénolique, procédé de préparation de la résine et composition d'encollage de fibres minérales la contenant**
Phenolharz, Verfahren zur Herstellung dieses Harzes, und dieses Harz enthaltende Mischung zum Verkleben von Mineralfasern
Phenolic resin, process for producing this resin, and resin composition for adhering mineral fibres

(30) Priorité: 12.10.1990 FR 9012604
(43) Date de publication de la demande: 15.04.1992
(73) Titulaire: ISOVER SAINT-GOBAIN, F-92400 Courbevoie (FR)
(72) Inventeur: Tetart, Serge, F-60740 Saint Maximin (FR); Segal, David, Hatfield PA 19440 (US)
(74) Mandataire: Muller, René

(56) Documents cités:
- EP-A- 0 083 523
- EP-A- 0 148 050
- EP-A- 0 480 448
- GB-A- 364 304
- PATENT ABSTRACTS OF JAPAN vol. 9, no. 112 (C-281)(1835) 15 Mai 1985 ; & JP-A-60 006 716
- March, Advanced Organic Chemistry (1968), pages 670-671

## Description

L'invention est relative à une résine phénolique, destinée à être utilisée dans une composition d'encollage pour fibres minérales. Cette résine résulte de la condensation, en présence d'un catalyseur basique, de phénol, de formaldéhyde, d'amine et d'urée.

L'invention est aussi relative à un procédé spécifique de préparation de cette résine et à la composition d'encollage des fibres minérales contenant ladite résine.

Elle a également pour objet l'utilisation des fibres minérales ainsi encollées, notamment pour la fabrication de produits pour l'isolation, ainsi que pour les produits destinés à être des substrats de culture hors-sol.

Les produits à base de fibres minérales peuvent être formés à partir de fibres obtenues par différents procédés. On peut citer, par exemple, la technique connue de l'étirage centrifuge, dans laquelle la matière en fusion est introduite dans un centrifugeur comprenant une multitude de petits orifices, projetée, sous l'action de la force centrifuge, vers la paroi périphérique du centrifugeur et s'en échappe par les orifices sous forme de filaments. Ceux-ci, à la sortie du centrifugeur, sont étirés et entraînés vers un organe récepteur par un courant gazeux ayant une vitesse et une température élevées, pour y former une nappe de fibres. Pour assurer l'assemblage des fibres entre elles, on projette sur les fibres lors de leur trajet vers l'organe récepteur, une composition, dite d'encollage, qui contient une résine thermodurcissable. La nappe de fibres ainsi traitées est ensuite soumise à un traitement thermique en étuve pour polycondenser la résine et obtenir un produit pour l'isolation présentant des propriétés désirées, telles que stabilité dimensionnelle, résistance à la traction, reprise d'épaisseur après compression, couleur homogène.

Les compositions d'encollages, qui doivent être pulvérisées sur les fibres minérales, contiennent une résine qui se présente généralement sous forme d'une composition aqueuse et, en outre, de l'urée et des adjuvants tels que silane, huiles minérales, ammoniaque, sulfate d'ammonium, et de l'eau.

On entend par résine, au sens de l'invention, le produit résultant de la condensation des réactifs de départ en présence d'un catalyseur, avant toute étape de cuisson dans une étuve.

Les propriétés recherchées pour les compositions d'encollage sont dépendantes des caractéristiques de la résine. Une composition d'encollage doit présenter, avant tout, une bonne aptitude à la pulvérisation, ainsi que des propriétés d'enrobage et de liage des fibres, et simultanément être peu polluante.

Pour cela, la résine doit, notamment, présenter une bonne stabilité dans le temps et avoir une diluabilité élevée à l'eau.

La résine doit être stable particulièrement pendant au moins 8 jours à 12-18°C. En effet, on doit pouvoir la conserver quelques jours avant de l'utiliser pour former la composition d'encollage. La composition d'encollage, qui contient la résine et des additifs mentionnés précédemment, est généralement préparée au moment de son utilisation.

La résine doit, de plus, présenter une diluabilité à l'eau élevée. La notion de diluabilité est particulièrement importante car la composition d'encollage contenant la résine est alors appropriée à la pulvérisation. On définit généralement la diluabilité de la façon suivante : la diluabilité à l'eau d'une résine sous forme de composition aqueuse est le volume d'eau désionisée que l'on peut, à une température donnée, ajouter à l'unité de volume de cette composition avant de provoquer la formation d'un trouble permanent.

La diluabilité à l'eau d'une résine, apte à être utilisée dans une composition d'encollage pulvérisable doit être de préférence, égale ou supérieure, à 20°C, à 1000 % pendant au moins 8 jours.

Il est nécessaire, en outre, que la résine soit aussi exempte que possible de produits de départ non transformés. En effet, les risques de pollution atmosphérique sont essentiellement dus à la présence de monomères volatils : ce sont par exemple les produits de départ nécessaires à l'obtention de la résine, par exemple du formaldéhyde et du phénol, non transformés lors de la réaction ou régénérés au cours de l'encollage des fibres ou ultérieurement.

Par conséquent, pour obtenir des compositions d'encollage avec lesquelles la teneur en générateurs de pollution, notamment en phénol libre et en formaldéhyde libre, est aussi réduite que possible, il faut que la résine présente le moins possible de produits de départ résiduels, tout en conservant ses qualités d'emploi.

Les objectifs, c'est-à-dire, une résine stable contenant peu de formaldéhyde et phénol libres, tout en conservant les propriétés souhaitées, notamment une forte diluabilité à l'eau qui permet une pulvérisation aisée sur les fibres minérales, sont opposés les uns aux autres puisque la réduction des teneurs en phénol et formaldéhyde libres est généralement obtenue en augmentant le degré de condensation, ce qui a pour conséquence de réduire la diluabilité.

Il est connu de préparer des résines, utiles pour les compositions d'encollage de fibres minérales, en faisant réagir du phénol et du formaldéhyde en présence d'un catalyseur basique. Pour favoriser la réaction entre le phénol et le formaldéhyde et diminuer ainsi la quantité de phénol n'ayant pas réagi et éviter des risques de pollution, il est connu d'utiliser des rapports molaires formaldéhyde/ phénol supérieur à 1 et, pour capter l'excès de formaldéhyde, d'introduire de l'urée.

On obtient ainsi des résines formées de condensats de formaldéhyde-phénol et d'urée-formaldéhyde.

Ainsi, comme il est décrit dans la demande de brevet européen EP-A-148 050, on a pu obtenir une résine sous forme liquide, résultant de la condensation, en milieu alcalin, de formaldéhyde, phénol et urée, présentant une diluabilité à l'eau au moins égale à 1000 % et ayant un taux de phénol libre et de formaldéhyde libre, exprimé en poids total de liquide, respectivement inférieur ou égal à 0,5 % et 3 %. Cette résine est obtenue avec un rapport molaire formaldéhyde/phénol compris entre 3 et 6. Le taux de phénol et de formaldéhyde libres se mesure par rapport au poids total de liquide.

Cette résine est considérée comme ayant des caractéristiques satisfaisantes pour être utilisée dans des compositions d'encollage de fibres minérales et comme étant peu polluantes.

Si le taux de phénol libre peut être considéré comme assez faible et entraîner peu de pollution, le taux de formaldéhyde libre dans la résine (3 % environ) est encore élevé et l'on cherche donc à le diminuer encore, tout en conservant les propriétés de la résine nécessaires à l'utilisation ultérieure souhaitée.

En outre, l'utilisation d'un rapport molaire F/P élevé, comme il est décrit au document EP-A-148 050, cité précédemment, permet de réduire notablement le taux de phénol libre, mais nécessite d'utiliser de l'urée pour réagir avec le formaldéhyde en excès. Il en résulte la formation du produit de condensation urée-formaldéhyde, produit qui est peu stable à la chaleur.

Cette instabilité thermique est un inconvénient puisque les fibres minérales traitées par la composition d'encollage sont soumises à un traitement thermique pour obtenir un produit pour l'isolation.

En effet, lors de l'utilisation de la résine pour l'encollage de fibres minérales, au cours duquel la résine est soumise à des températures supérieures à 100°C, le produit de condensation urée-formaldéhyde, redonne, sous l'effet de la chaleur, du formaldéhyde qui est libéré et augmente alors la pollution atmosphérique.

Le but de l'invention est donc d'obtenir une nouvelle résine qui présente des caractéristiques satisfaisantes pour être utilisée dans une composition d'encollage pulvérisable, et qui soit peu polluante, notamment en ce qui concerne le formaldéhyde, c'est-à-dire une résine qui contienne un taux de formaldéhyde libre faible et, en outre, qui soit stable thermiquement pour éviter que du formaldéhyde soit régénéré au cours de l'utilisation de la résine.

Un autre but de l'invention est un procédé de préparation de la résine, en particulier un procédé qui permette d'utiliser un rapport molaire formaldéhyde/phénol plus faible de manière à diminuer la quantité d'urée nécessaire pour la réaction avec le formaldéhyde en excès.

L'invention a aussi pour objet une composition d'encollage comprenant cette résine, et son utilisation pour encoller les fibres minérales afin de constituer des produits d'isolation ou des substrats de culture hors-sol.

La résine liquide, selon l'invention, destinée à être utilisée dans une composition d'encollage pour fibres minérales, contient essentiellement des condensats de phénol-formaldéhyde (P-F), d'urée-formaldéhyde (U-F) et de phénol-formaldéhyde-amine (P-F-A). Cette résine présente un taux de formaldéhyde libre (FL), exprimé en poids total de liquide, inférieur ou égal à 3 %. Elle présente aussi une diluabilité à l'eau, mesurée à 20°C, au moins égale à 1000 %. La résine est en outre stable thermiquement, c'est-à-dire que la résine contient peu ou pas de méthylolurée qui est relativement instable.

Pour évaluer cette stabilité thermique, on fait subir, à une composition d'encollage contenant la résine, un test simulant les conditions thermiques auxquelles est soumise une composition d'encollage lors de son utilisation pour la fabrication d'un produit d'isolation tel que décrit précédemment. On considère que la résine est stable thermiquement et peu polluante en ce qui concerne le formaldéhyde, si la quantité de formaldéhyde libérée lors de ce test est inférieure à 4 g de formaldéhyde par kilogramme d'extrait sec d'une solution d'encollage à 10 %. La stabilité thermique peut être aussi montrée par thermogravimétrie.

L'amine ( A ) est choisie parmi celles qui permettent une réaction du type Mannich ; ce sont par exemple des alkanolamines, comme la monoéthanolamine (MEA), la diéthanolamine (DEA), des amines cycliques comme la pipéridine, la pipérazine et la morpholine.

Selon l'invention, on fait précéder la réaction du formaldéhyde libre en excès avec l'urée par une réaction faisant réagir le formaldéhyde libre et le phénol libre avec une amine.

La réaction selon l'invention est du type Mannich qui transforme, de manière générale, un aldéhyde, un composé organique comprenant des atomes d'hydrogène actifs et une amine, en une base de Mannich par condensation. Ici, l'aldéhyde est le formaldéhyde, le composé organique est le phénol. Quant à l'amine, on peut la choisir, par exemple, parmi celles citées précédemment. Dans l'invention, l'amine réagit avec le phénol ou les méthylolphénols et le formaldéhyde, ce qui confère à la résine obtenue une structure beaucoup plus stable.

Pour obtenir une résine telle que définie précédemment, l'invention propose un procédé qui consiste à faire réagir du phénol et du formaldéhyde dans un rapport molaire supérieur à 1 en présence d'un catalyseur basique, à refroidir le mélange réactionnel et à faire réagir le formaldéhyde en excès avec de l'urée. L'invention se caractérise en ce que, avant l'addition d'urée et au cours du refroidissement, on introduit dans le milieu réactionnel une amine apte à la réaction de Mannich.

Plus particulièrement, on fait réagir le phénol et le formaldéhyde dans un rapport molaire compris entre 1,8 et 5 jusqu'à l'obtention d'un taux de conversion du phénol égal ou supérieur à 93 % et on commence à refroidir le mélange réactionnel.

Le taux de conversion du phénol est le pourcentage de phénol ayant participé à la réaction de condensation formaldéhyde-phénol par rapport à 100 % de phénol initial. La réaction de condensation formaldéhyde-phénol est stoppée, par refroidissement du mélange réactionnel, à un stade qui correspond à une résine encore diluable à l'eau.

Selon l'invention, l'amine (A) est ajoutée avant l'addition d'urée, soit au cours du refroidissement du mélange réactionnel, soit à froid. L'amine est ajoutée progressivement car la réaction avec le formaldéhyde et le phénol est exothermique. L'addition de l'amine peut avoir lieu dès le début du refroidissement du mélange réactionnel ou bien lorsque le mélange a été refroidi jusqu'à une température comprise entre 45° et 20°C.

La réaction selon l'invention, entre le phénol, le formaldéhyde, les méthylolphénols et l'amine permet de diminuer la quantité de formaldéhyde libre dans le milieu réactionnel avant l'addition d'urée, et, par conséquent, d'obtenir une résine comprenant un condensat urée-formol en moins grande quantité : il en résulte donc une plus grande stabilité thermique pour la résine. La réaction du formaldéhyde libre, avec l'amine, puis avec de l'urée, permet d'abaisser encore le taux de formaldéhyde libre dans la résine finale et même d'obtenir un taux de formaldéhyde libre, dans la résine, inférieur à 0,75 %, et même inférieur à 0,5 %.

L'addition d'une amine, selon l'invention, permet, en outre, de diminuer encore le taux de phénol libre, particulièrement pour les résines préparées à partir d'un rapport molaire F/P élevé.

En effet, dans un procédé connu de préparation d'une résine phénolique, comme la résine décrite au brevet EP-A-148 050, la réaction de condensation du phénol et du formaldéhyde (avec un rapport molaire F/P compris entre 3 et 6) a lieu jusqu'à l'obtention d'un taux de conversion supérieur à 98 % ; au cours des étapes suivantes du procédé de préparation, la quantité de phénol n'ayant pas réagi ne varie pas.

L'addition d'une amine selon l'invention, après la réaction de condensation du phénol et du formaldéhyde, permet de fixer du phénol n'ayant pas réagi, ce qui diminue la quantité de phénol libre. On peut ainsi atteindre des taux de phénol libre inférieurs à 0,2 %.

L'utilisation d'une amine, conformément à l'invention, présente, en outre, l'avantage de pouvoir faire réagir du phénol et du formaldéhyde dans un rapport molaire F/P inférieur à 3, tout en obtenant une résine ayant les caractéristiques souhaitées de diluabilité à l'eau et de non pollution. En effet, lorsqu'on diminue le rapport molaire F/P, le formaldéhyde libre, dans la résine, diminue, mais le phénol libre augmente. L'addition d'amine, selon l'invention, permet d'obtenir, à partir de rapport molaire F/P faible, des résines contenant des pourcentages de phénol libre quine pourraient être obtenus qu'en utilisant des rapports molaires élevés.

Plus particulièrement, la préparation de la résine a lieu selon un cycle de température qui se divise schématiquement en trois phases : une phase de chauffage, un palier de température et une phase de refroidissement.

Selon ce procédé, on fait réagir, lors d'une première étape, du phénol et du formaldéhyde, en présence d'un catalyseur basique, en chauffant progressivement jusqu'à une température comprise entre 60°C et 75°C, et, de préférence à environ 70°C. Le rapport molaire F/P comme indiqué précédemment et avantageusement compris entre 1,8 et 5.

Comme catalyseur, on peut utiliser divers catalyseurs basiques, comme la triéthylamine, la chaux CaO et les hydroxydes de métaux alcalins ou alcalino-terreux, comme les hydroxydes de sodium et de potassium, de calcium et de baryum.

Quel que soit le catalyseur choisi, la quantité employée est avantageusement de 6 à 20 moles d'équivalent d'hydroxyle OH- pour 100 moles de phénol initial.

Lors de la deuxième phase (palier de température), la température du mélange réactionnel, atteinte pendant la phase de chauffage, c'est-à-dire 60°C à 75°C et de préférence 70°C, est maintenue jusqu'à ce que l'on obtienne un taux de conversion du phénol d'au moins 93 %. La durée de ce palier de température est, de préférence, au plus de 90 mn environ.

La troisième phase est une phase de refroidissement au cours de laquelle on introduit, suivant l'invention, l'amine au mélange réactionnel de manière à déclencher la réaction de Mannich, produisant le condensat phénolformaldéhyde-amine.

On peut introduire l'amine dès le début du refroidissement du mélange réactionnel. L'addition d'amine a lieu progressivement, par exemple, à raison de 0,33 % en poids par minute, de la quantité totale d'amine par rapport à la masse de la résine, car la réaction est exothermique.

On peut aussi ajouter l'amine en fin de phase de refroidissement, par exemple entre 20°C et 45°C.

La durée de l'addition de l'amine peut varier entre 20 mn et 45 mn.

La quantité d'amine, en particulier d'alcanolamine, ajoutée varie entre 5 et 40 % en poids par rapport au poids du phénol.

Après la formation du condensat phenol-formaldéhydeamine, si cela est nécessaire, on refroidit le mélange réactionnel pour que sa température atteigne 20-25°C environ et on le neutralise afin de stopper les réactions de condensation.

Généralement, on neutralise le mélange réactionnel en ajoutant un acide, tel que l'acide sulfurique, l'acide sulfamique, l'acide phosphorique, l'acide borique, en quantité suffisante pour que le pH du mélange soit compris entre 7,0 et 8,5 environ. Après la neutralisation, on ajoute de l'urée afin de fixer le formaldéhyde n'ayant pas réagi.

Selon l'invention, l'addition de l'urée a lieu à froid, c'est-à-dire lorsque la température du mélange réactionnel a atteint 20-25°C environ. La quantité d'urée ajoutée varie de 10 % à 50 % en poids par rapport au poids de résine exprimé en extrait sec.

L'addition de l'urée à froid, lors de la préparation de la résine, présente un intérêt puisque la réaction entre le formaldéhyde et l'urée, à froid, est lente, ce qui permet de contrôler la réaction et éviter une condensation trop poussée conduisant à diminuer la diluabilité de la résine finale.

Selon une autre variante du procédé selon l'invention, on peut ajouter au mélange réactionnel, avant ou après la neutralisation, de l'ammoniaque pour capter une partie du formaldéhyde libre. Il se forme de xaméthylènetétramine.

L'ammoniaque est ajoutée sous forme d'une solution aqueuse à raison d'une quantité comprise entre 0 et 100 % de la stoechiométrie de la réaction formaldéhyde-ammoniaque, la quantité de formaldéhyde étant calculé à partir des concentrations au moment de l'introduction de l'ammoniaque.

L'invention concerne aussi une composition d'encollage destinée à l'enrobage de fibres minérales, notamment de fibres de verre ou de roche, ainsi que les fibres encollées obtenues pouvant être utilisées pour la fabrication de produits d'isolation et de substrats pour culture hors-sol.

Une composition d'encollage selon l'invention comprend la résine selon l'invention, des additifs d'encollage et de l'urée.

Comme indiqué précédemment, la résine selon l'invention peut présenter la caractéristique d'avoir un taux de formaldéhyde libre très faible, inférieur à 2 %, avantageusement inférieur à 0,75 %. Dans ce cas, la présence d'urée dans la composition d'encollage n'est plus nécessaire ou seulement pour ajuster le temps de gel de l'encollage afin d'éviter d'éventuels problèmes de prégélification.

Dans les compositions d'encollage selon l'invention, contenant de l'urée, les proportions des composants sont, exprimées en parts de matière sèche, de 50 à 90 parts de résine, de 10 à 50 parts d'urée.

D'une manière générale, une composition typique d'encollage comprend les additifs suivants, pour 100 parts de matière sèche de résine et d'urée :
- 0 à 5 parts de sulfate d'ammonium, généralement de 1 à 3,
- 0 à 2 parts de silane, particulièrement un aminosilane;
- 0 à 20 parts d'huile, généralement 6 à 15,
- 0 à 20 parts d'ammoniaque à 20 %, généralement de 3 à 12,

Le rôle de ces ingrédients est connu et n'est que brièvement rappelé ici : le sulfate d'ammonium sert de catalyseur de polycondensation (dans l'étuve à chaud) après la pulvérisation de la composition d'encollage sur les fibres ; le silane est un agent de pontage entre les fibres et la résine et joue également un rôle d'agent anti-vieillissement ; les huiles sont des agents anti-poussières et hydrophobes. L'ammoniaque a, à froid, un rôle de retardateur de polycondensation et fixe en outre le formaldéhyde libre ; l'urée modifie la composition pour agir sur la prégélification de l'encollage et diminuer la pollution.

Un silane, que l'on peut avantageusement utiliser, est l'aminosilane commercialisé par la société Union Carbide sous l'appellation "A1100". Comme huile, on peut utiliser l'huile minérale commercialisée par la société Mobil Oil sous l'appelation "Mulrex 88".

Les exemples suivants non limitatifs illustrent l'invention.

On peut classer les exemples suivants selon deux variantes du procédé d'obtention de la résine selon l'invention. Dans un cas, la fabrication de résines a lieu en introduisant l'amine à chaud ; dans l'autre cas, on ajoute l'amine à froid.

Dans les deux cas, la première étape de condensation entre le phénol et le formaldéhyde se déroule de la manière suivante :

On introduit du formaldéhyde et du phénol dans un réacteur ; puis sous agitation mécanique, on chauffe ou en refroidit jusqu'à atteindre une température un peu supérieure à la température de fusion du phénol. On poursuit l'agitation mécanique pendant toute la durée du cycle réactionnel. On introduit le catalyseur de façon régulière puis, immédiatement après la fin de cette introduction, on élève la température du mélange jusqu'à une valeur permettant une condensation optimale et l'obtention d'une résine diluable. On maintient cette température jusqu'à ce que le taux de conversion du phénol soit supérieur à 93 %.

Puis, dans un cas, on refroidit progressivement en ajoutant l'amine sous agitation ; dans l'autre cas, on refroidit progressivement jusqu'à une température comprise entre 45°C et 20°C et on ajoute l'amine.

Les exemples 1 et 2 concernent la fabrication de résines avec addition d'amine pendant le refroidissement.

### EXEMPLE 1

### a) préparation de la résine

Dans un réacteur de 2 litres équipé d'un système d'agitation, d'un condenseur, d'un thermomètre et d'une entrée pour réactifs, on ajoute 564,66 g de phénol (6 moles) à 1217,43 g de formaldéhyde (15 moles) en solution aqueuse à 37 %, pour avoir un rapport molaire F/P égal à 2,5.

Le mélange est porté à 45°C sous agitation, puis on introduit régulièrement en 30 minutes, en maintenant la température à 45°C, 56,47 g de soude en solution aqueuse à 50 % (soit 11 moles OH⁻ pour 100 moles de phénol initial).

On élève ensuite la température de façon régulière de 45 à 70°C en 30 minutes et on la maintient à 70°C pendant 80 minutes, jusqu'à ce que le taux de conversion du phénol soit de 93 %.

Puis, on commence à refroidir régulièrement le mélange ; on ajoute progressivement pendant les 30 premières minutes, la diéthanolamine (141,16 g soit 25 % en poids, par rapport au poids du phénol). A la fin de l'addition de l'amine, la température est de 60°C environ. Pendant les 15 minutes qui suivent la fin de l'introduction de l'amine, comme la réaction est exothermique, on maintient la température du milieu réactionnel à 60°C. Puis, on continue à refroidir le mélange. Lorsque la température du mélange réactionnel atteint 25°C environ, après 30 mn environ, on ajoute de l'acide sulfurique en solution à 20 %, en 60 minutes, de manière à atteindre un pH de 8,0-8,1. On introduit ensuite progressivement, en 60 minutes, de l'urée en grains (426,5 g soit 35 % en poids par rapport au poids total de la résine exprimé en extrait sec).

La résine se présente sous l'aspect d'une composition aqueuse limpide ayant une diluabilité à l'eau, à 20°C, infinie après plus de 8 jours. Le taux de phénol libre est de 0,8 % et le taux de formaldéhyde libre est inférieur à 0,5 %.

On peut noter que, si l'on compare cette résine avec une résine obtenue suivant le procédé décrit au brevet EP-A-148 050, par exemple la résine de l'exemple 4, ces deux résines ont des taux de phénol libre légèrement différents, (0,5 % et 0,8 %) ; ceci est dû au fait que dans un cas (celui de la présente invention), le rapport F/P est de 2,5 et dans l'autre cas (celui du brevet) le rapport F/P est de 3,5. En ce qui concerne le taux de formaldéhyde libre de la résine de l'exemple 4 du brevet précédemment cité, il est de 1,12 % et la diluabilité de 2000 % après plus de 8 jours.

### b) Composition d'encollage

On utilise la résine obtenue précédemment pour préparer une composition d'encollage sans ajout d'urée. Les additifs d'encollage sont du sulfate d'ammonium et de l'ammoniaque.

Pour 100 parties pondérales de résine, le sulfate d'ammonium représente 2 parties et l'ammoniaque 1 partie.

### c) formation du produit fini :

A la sortie d'un dispositif de fabrication de fibres minérales par étirage centrifuge connu, on pulvérise sur les fibres, entre leur sortie du dispositif centrifuge et leur réception sur un organe collecteur, la composition d'encollage décrite précédemment à raison de 2 à 20 % en poids de composition d'encollage par rapport au poids du produit d'isolation fini. L'eau contenue dans la composition est partiellement vaporisée du fait de la température élevée. Après réception des fibres sur l'organe collecteur et formation d'un matelas, on les soumet à un traitement thermique à l'étuve, à une température comprise entre 180 et 200°C, pendant 2 minutes environ, ce qui conduit à une polycondensation de la résine.

Lors de son utilisation pour la formation du produit fini, la composition d'encollage qui comprend la résine selon l'invention, constituée de condensats de phénolformaldéhyde, formaldéhyde-urée et phénol-formaldéhyde-amine, est soumise à des températures supérieures à 100°C. Le condensat urée-formaldéhyde, étant peu stable à la chaleur, a tendance à se décomposer pour régénérer du formaldéhyde.

Pour évaluer la pollution due au formaldéhyde libre qui peut être libéré pendant le traitement des fibres minérales par la composition d'encollage, on utilise une méthode simulant les conditions auxquelles est soumise la composition d'encollage.

### Méthode d'évaluation des émanations de formaldéhyde :

On place 100 g de la composition d'encollage à 10 % d'extrait sec dans une étuve à 180°C pendant 2 h et on la soumet à un balayage par de l'air à raison de 1 litre par minute. On fait passer les vapeurs qui se dégagent dans trois barboteurs contenant de l'eau et on dose le formaldéhyde par spectrocolorimétrie (méthode à l'acide chromotropique) et le phénol, par chromatographie en phase gazeuse à l'aide d'un appareil muni d'un détecteur à ionisation de flamme. Pour la détermination du phénol, on utilise des solutions d'étalonnage.

La quantité de formaldéhyde dégagé est de 2,5 g, celle de phénol libre est de 8,8 g, par kilogramme d'extrait sec d'une solution d'encollage à 10 %.

A titre d'indication, pour un encollage standard (que l'on définira ci-après), les quantités respectives de formaldéhyde et phénol dégagées dans les mêmes conditions s'élèvent à 6 et 11 g.

### Exemple 2

Dans cet exemple, on fait réagir 1003,15 de formaldéhyde (12,4 moles) en solution à 37 % avec 377,6 g de phénol (4 moles). Comme catalyseur, on utilise de la chaux (CaO) à raison de 20,8 g (0,316 mole). Au cours du refroidissement, on introduit de la monoéthanolamine (75,52 g soit 20 % en poids par rapport au phénol).

La quantité d'urée ajoutée après la neutralisation par l'acide sulfurique pour atteindre un ph de 8,2 , correspond à 35 % en poids par rapport au poids total de résine exprimé en extrait sec.

La résine obtenue présente une diluabilité à l'eau infinie, un taux de phénol libre inférieur à 0,2 % et un taux de formaldéhyde libre inférieur à 0,5 %.

L'exemple suivant concerne une résine préparée en ajoutant l'amine à froid.

### Exemple 3

### a) Préparation de la résine

Dans un réacteur équipé de la même manière, on ajoute 470,55 g de phénol (5 moles) à 1420,34 g de formaldéhyde en solution aqueuse à 37 %, correspondant à un rapport molaire F/P de 3,5. Comme dans l'exemple 1, on chauffe le mélange aux environs de 45°C, puis on ajoute, en 30 mn, 47,06 g de solution aqueuse de soude à 50 % (soit 0,588 mole et 11,76 moles OH⁻ pour 100 moles de phénol initial) en maintenant la température à 45°C. Le mélange est porté à 70° en 30 mn, puis maintenu à cette température pendant 90 mn environ, jusqu'à l'obtention d'un taux de conversion du phénol de 97,5 %. Le mélange est ensuite progressivement refroidi jusqu'à 25°C, en 50 mn. On ajoute alors 38,76 g de mono-éthanolamine, correspondant à 8,2 % en poids par rapport au poids de phénol ; l'addition a lieu progressivement en 20 mn. On neutralise le mélange réactionnel par une solution à 20 % d'acide sulfurique, jusqu'à pH 7,4. Puis, on ajoute, à 20°C, en 30 mn environ, de l'ammoniaque en solution à 27 %, en quantité correspondant à 20 % de la stoechiométrie de la réaction formaldéhyde-ammoniaque.

On ajoute ensuite, en 60 mn, 471,2 g d'urée en grains, correspondant à 35 % en poids par rapport au poids total de résine exprimé en extrait sec.

La résine se présente sous l'aspect d'une composition aqueuse limpide ayant une diluabilité à l'eau, à 20°C, infinie après plus de 8 jours. Le taux de phénol libre est inférieur à 0,2 % et le taux de formaldéhyde libre est inférieur à 0,75 %.

### b) Composition d'encollage

Comme à l'exemple 1, on prépare une composition d'encollage contenant uniquement de la résine préparée précédemment et comme additifs d'encollage, 6 parties de sulfate d'ammonium et 3 parties d'ammoniaque.

On évalue la stabilité thermique de la résine comme à l'exemple 1.

La quantité de formaldéhyde, régénéré lors du test est de 3 g, celle du phénol de 6 g par kilogramme d'extrait sec de la solution d'encollage à 10 %.

### Exemple 4

On prépare une résine, comme à l'exemple 1, à partir de formaldéhyde et de phénol pour avoir un rapport molaire F/P de 2,3. La réaction entre le formaldéhyde et le phénol a lieu à 70°C pendant 90 mn. On ajoute de la diéthanolamine, à raison de 22 % en poids par rapport par rapport au poids de phénol, dès le début du refroidissement du mélange réactionnel, comme indiqué à l'exemple 1. Après la neutralisation par l'acide sulfurique, on n'ajoute pas d'urée.

La résine obtenue présente un taux de phénol libre de 1,3 % et un taux de formaldéhyde libre inférieur à 0,5 %. Le taux de phénol libre plus élevé que dans les autres exemples est dû au rapport F/P faible. Par contre, comme de l'urée n'a pas été ajouté, la résine ne contient pas de condensat urée-formaldéhyde et est donc plus stable. On pourra ajouter de l'urée dans la composition d'encollage contenant cette résine pour ajuster le temps de gel de l'encollage.

La suite de la description concerne des applications de fibres minérales encollées selon l'invention.

Les fibres minérales encollées avec une composition d'encollage conforme à l'invention peuvent être employées notamment pour constituer des produits d'isolation, mais également afin de constituer des substrats de culture hors-sol.

Les avantages liés à l'utilisation de compositions d'encollage selon l'invention dans ces deux domaines d'application vont être mis en évidence par les exemples comparatifs ci-dessous, concernant cinq compositions A₁, A₂, B₁, B₂ et C.

Les compositions A₁ et A₂ sont les compositions standards, comme celle précédemment mentionnée. Elles comportent toutes deux une résine uniquement à base de formaldéhyde et phénol, dans un rapport molaire F/P compris entre 2,7 et 4,2, et de préférence entre 3,0 et 3,5 ; ainsi que des additifs usuels d'encollage précédemment précisés : urée, sulfate d'ammonium, silane, ammoniaque et éventuellement une huile minérale. Il n'y a donc pas d'addition d'urée dans le cycle de fabrication de la résine, mais uniquement lors de la formulation finale de l'encollage.

Les compositions B₁ et B₂ sont conformes à l'invention. Elles comportent une résine de composition identique à celle indiquée à l'exemple 1 précédent, avec un rapport F/P de 2,5, mais avec une proportion d'urée légèrement différente, comptant pour 20 parts d'extrait sec d'encollage alors -que la résine complète compte 100 parts pour B₁ et 35 parts dans le cas de B₂. Elles comportent également des additifs analogues aux précédents, mais cette fois pas d'urée supplémentaire.

La composition C est conforme à l'invention également, en tous points semblable à la composition B₁. Seul est modifié le rapport F/P, ici égal à 2.

On indique ci-dessous les proportions, en parts d'extrait sec des encollages, de chacun des constituants de ceux-ci :

| | résine (hors urée) | urée | huile | sulfate | silane | ammoniaque |
|---|---|---|---|---|---|---|
| A₁ | 70 | 30 | 0 | 1 | 0,1 | 6 |
| A₂ | 55 | 45 | 9,5 | 3 | 0,3 | 6 |
| B₁ | 80 | 20 | 0 | 1 | 0,1 | 6 |
| B₂ | 65 | 35 | 9,5 | 3 | 0,3 | 0 |
| C | 80 | 20 | 0 | 1 | 0,1 | 6 |

Que ce soit pour obtenir des panneaux d'isolation ou des substrats de culture, on a comparé les taux de phénol et formaldéhyde dégagés sur une ligne de fibrage par centrifugation/étirage de fibres de verre, lorsqu'on pulvérise les encollages A₂ etB₂ entre l'organe de fibrage (le centrifugeur) et l'organe récepteur (le tapis convoyeur). Ces mesures sont effectuées au niveau de l'organe récepteur recueillant les fibres, usuellement muni de moyens d'aspiration permettant de collecter plus efficacement les fibres. Ce sont dans les flux gazeux créés par ces aspirations que sont évaluées les quantités de phénol et de formaldéhyde, exprimées en kilogramme par tonne de verre fibré :

| | phénol | formaldéhyde |
|---|---|---|
| A₂ | 0,36 | 1,70 |
| B₂ | 0,17 | 0,17 |

Il va de soi que les proportions d'encollages A₂ et B₂ par rapport à la quantité de verre imprégné sont identiques (environ 4,5 %, soit un taux usuel pour les produits d'isolation). Cela montre alors qu'utiliser un encollage B₂ selon l'invention, plutôt qu'un encollage A₂ standard, permet de réduire considérablement les taux de phénol (de 53 %) et surtout de formaldéhyde (de 85 %) dégagés sur la ligne de fibrage à l'endroit le plus susceptible de favoriser ces dégagements.

Avec une composition d'encollage présentant une résine selon l'invention avec un rapport F/P de 2,5, on atteint donc des taux de relargage de phénol et de formaldéhyde sur ligne de fibres de verre encollées de 0,17 g par tonne de verre.

On a également évalué la teneur de formaldéhyde relargué par les substrats hors-sol à base de fibres de verre et de roche encollées, lorsque ceux-ci sont mis dans leur condition d'utilisation, c'est-àdire lorsqu'ils sont imprégnés d'eau, celle-ci irriguant les plantes et leur apportant les substances nécessaires à leur croissance.

On précise tout d'abord la méthode utilisée pour simuler ces conditions : elle consiste à prélever des échantillons 75 x 70 x 40 mm³ (210 ml) dans le substrat final, la proportion massique de l'encollage par rapport aux fibres étant cette fois d'environ 2,5 %, taux usuel pour les produits de culture hors-sol. Ces échantillons sont ensuite mis à macérer dans une boîte en matière plastique parallèlépipédique en présence de 250 ml d'eau déminéralisée. (Les dimensions de la boîte sont telles que l'échantillon se trouve alors complètement imbibé par l'eau).

A noter que les conditions et la durée de macération ont été choisies pour correspondre le mieux possible aux conditions d'un pain de culture standard, saturé dans sa gaine plastique sur lequel on pose le plant de poivron après 3 jours d'imbibition.

Après 3 jours de contact, "boîte fermée", la solution (eau déminéralisée + formaldéhyde éventuel) est récupérée en totalité par pression et filtration. Puis la quantité de formaldéhyde passée en solution dans l'eau est dosée à l'acide chromotropique, et exprimée en milligramme de formaldéhyde par litre de solution aqueuse.

Les résultats des essais comparatifs avec les 3 encollages A₁, B₁, C sont regroupés dans le tableau ci-dessous :

| essais | formaldéhyde (roche) | formaldéhyde (verre) |
|---|---|---|
| A₁ | 1,36 | 0,98 |
| B₁ | 0,35 | 0,53 |
| C | - | 0,58 |

De manière parfaitement inattendue, on constate donc que les encollages selon l'invention B₁ et C₁ relarguent beaucoup moins de formaldéhyde dans l'eau que l'encollage standard A₁, la réduction étant de plus de 41 % dans le cas de fibres de verre, et d'au moins 74 % dans le cas de fibres de roche.

Or, il semble maintenant établi que du formaldéhyde, solubilisé en trop grande quantité dans l'eau d'irrigation, peut avoir des conséquences fâcheuses sur la croissance des plantes. Il est donc particulièrement avantageux de proposer des encollages selon l'invention beaucoup moins susceptibles que d'autres de dégager du formaldéhyde par hydrolyse en milieu aqueux.

A titre d'indication, on indique donc qu'une composition d'encollage avec une résine selon l'invention ayant un rapport F/P de 2,5 permet d'atteindre des taux de relargage de formaldéhyde pour des substrats de culture en fibres de verre et en fibres de roche respectivement de 0,35 mg/l et 0,53 mg/l d'eau d'immersion, soit des taux tous inférieurs à 0,60 mg/l.

On précise en outre que si toutes les résines selon l'invention peuvent être utilisées avec profit dans des encollages pour produits d'isolation ou de culture hors-sol, il paraît préférable d'éviter de catalyser la polymérisation de la résine par l'oxyde de baryum, qui risque d'être ultérieurement toxique pour les plantes.

## Revendications

1. Résine liquide contenant des condensats de phénol-formaldéhyde et d'urée-formaldéhyde présentant un taux de formaldéhyde libre inférieur ou égal à 3%, le taux étant exprimé en poids total de liquide et une diluabilité à l'eau, à 20°C, au moins égale à 1000%, **caractérisée en ce qu'**elle contient, en outre, un condensat de phénol-formaldéhyde-amine destiné à améliorer la stabilité, notamment thermique, de la résine, l'amine étant susceptible de réagir suivant la réaction de Mannich.

2. Résine conforme à la revendication 1, **caractérisée en ce que** l'amine est une alcanolamine.

3. Résine conforme à la revendication 2, **caractérisée en ce que** l'amine est la monoéthanolamine ou la diéthanolamine.

4. Résine conforme à l'une des revendications 1 à 3, **caractérisée en ce qu'**elle présente un taux de formaldéhyde libre inférieur à 0,75%, un taux de phénol libre inférieur à 0,2% et une diluabilité infinie.

5. Résine conforme à l'une des revendications 1 à 4, **caractérisée en ce qu'**elle présente un taux de phénol libre inférieur à 0,2%, un taux de formaldéhyde libre inférieur à 0,5% et une diluabilité à l'eau infinie.

6. Procédé de préparation d'une résine contenant des condensats de phénol-formaldéhyde et d'urée-formaldéhyde, consistant à faire réagir du formaldéhyde et du phénol dans un rapport molaire F/P supérieur à 1, en présence d'un catalyseur basique, à refroidir le mélange réactionnel et à faire réagir le formaldéhyde en excès avec de l'urée, **caractérisé en ce que**, avant l'addition de l'urée, on ajoute au milieu réactionnel, une amine apte à la réaction de Mannich.

7. Procédé conforme à la revendication 6, **caractérisé en ce qu'**on fait réagir le phénol et le formaldéhyde, dans un rapport molaire compris entre 1,8 et 5.

8. Procédé conforme à l'une des revendications 6 ou 7, **caractérisé en ce qu'**on fait réagir le phénol et le formaldéhyde en présence d'un catalyseur basique en quantité correspondant à 6 à 20 moles d'équivalents hydroxydes OH⁻ pour 100 moles de phénol initial, à une température comprise entre 60°C et 75°C, et de préférence à 70°C environ, jusqu'à l'obtention d'un taux de conversion du phénol égal ou supérieur à 93%.

9. Procédé conforme à l'une des revendications 6 à 8, **caractérisé en ce que** l'amine est une alcanolamine.

10. Procédé conforme à la revendication 9, **caractérisé en ce que** l'alcanolamine est la monoéthanolamine ou la diéthanolamine.

11. Procédé conforme à l'une des revendications 6 à 10, **caractérisé en ce qu'**on ajoute l'amine en quantité de 5 à 40% en poids par rapport au poids de phénol.

12. Procédé conforme à l'une des revendications 6 à 11, **caractérisé en ce qu'**on introduit progressivement l'amine au cours du refroidissement du mélange réactionnel.

13. Procédé conforme à l'une des revendications 6 à 11, **caractérisé en ce qu'**on refroidit le mélange réactionnel jusqu'à une température comprise entre 45°C et 20°C, puis on ajoute progressivement l'amine à froid.

14. Procédé conforme à l'une des revendications 6 à 13, **caractérisé en ce que** le catalyseur basique est de la chaux CaO, de l'hydroxyde de sodium, de potassium, de calcium ou de baryum ou de la triéthylamine.

15. Procédé conforme à l'une des revendications 6 à 14, **caractérisé en ce qu'**on commence à ajouter l'urée lorsque le mélange réactionnel est à une température de 25°C environ.

16. Procédé conforme à la revendication 15, **caractérisé en ce que** la quantité d'urée ajoutée représente de 10 à 50% en poids par rapport au poids total de résine exprimé en extrait sec.

17. Procédé conforme à l'une des revendications 6 à 16, **caractérisé en ce qu'**on ajoute de l'ammoniaque en quantité de 0 à 100%, de la stoechiométrie de la réaction formaldéhyde-ammoniaque, avant d'introduire l'urée.

18. Procédé conforme à l'une des revendications 6 à 17, **caractérisé en ce qu'**on neutralise le mélange réactionnel, avant l'addition d'urée, par de l'acide sulfurique, sulfamique, phosphorique ou borique.

19. Composition d'encollage pour fibres minérales comprenant une résine phénolique conforme à l'une des revendications 1 à 5, de l'urée et éventuellement des additifs d'encollage.

20. Composition d'encollage conforme à la revendication 19, comprenant, exprimées en parts de matière sèche, de 50 à 90 parts de résine et de 10 à 50 parts d'urée.

21. Composition d'encollage pour fibres minérales, comprenant une résine phénolique conforme à l'une des revendications 1 à 5, et éventuellement des additifs d'encollage.

22. Fibres minérales encollées avec la composition d'encollage conforme à l'une des revendications 19 à 21, **caractérisées en ce qu'**elles sont utilisées pour fabriquer des produits d'isolation.

23. Fibres minérales encollées avec la composition d'encollage conforme à l'une des revendications 19 à 21, **caractérisées en ce qu'**elles sont utilisées pour fabriquer des substrats de culture hors-sol.

24. Fibres minérales selon l'une des revendications 22 ou 23, **caractérisées en ce qu'**elles présentent des taux de relargage de phénol et de formaldéhyde dans l'atmosphère très réduits, notamment sur la ligne de fibrage.

25. Fibres minérales selon la revendication 23, **caractérisées en ce que** les substrats qui en sont constitués présentent un taux de relargage de formaldéhyde en milieu aqueux très réduit.

26. Produits d'isolation obtenus à partir de fibres minérales encollées selon la revendication 22 ou 24.

27. Substrats pour culture hors-sol obtenus à partir de fibres minérales encollées selon l'une des revendications 23, 24 ou 25.

28. Substrats pour culture hors-sol selon la revendication 27, **caractérisés en ce que** lorsque la composition d'encollage contient une résine selon l'invention dont le rapport molaire du formaldéhyde sur celui du phénol est égal à 2,5, le taux de relargage de formaldéhyde est de moins de 0,60 milligramme par litre de solution aqueuse d'immersion dudit substrat.

## Patentansprüche

1. Flüssiges Harz, welches Kondensate von Phenol-Formaldehyd und Harnstoff-Formaldehyd enthält, einen Gehalt an freiem Formaldehyd von weniger oder gleich 3%, wobei sich der Gehalt auf das Gesamtgewicht an Flüssigkeit bezieht, und eine Verdünnbarkeit mit Wasser bei 20°C um mindestens 1000% besitzt, dadurch gekennzeichnet, daß es ferner ein Phenol-Formaldehyd-Amin-Kondensat enthält, um die Stabilität des Harzes, insbesondere die thermische zu verbessern, wobei das Amin imstande ist, gemäß der Mannich-Reaktion zu reagieren.

2. Harz gemäß Anspruch 1, dadurch gekennzeichnet, daß das Amin ein Alkanolamin ist.

3. Harz gemäß Anspruch 2, dadurch gekennzeichnet, daß das Amin das Monoethanolamin oder das Diethanolamin ist.

4. Harz gemäß einem der Ansprüche 1 bis 3, dadurch gekennzeichnet, daß es einen Gehalt an freiem Formaldehyd von weniger als 0,75%, einen Gehalt an freiem Phenol von weniger als 0,2% und eine unendliche Verdünnbarkeit aufweist.

5. Harz gemäß einem der Ansprüche 1 bis 4, dadurch gekennzeichnet, daß es einen Gehalt an freiem Phenol von weniger als 0,2%, einen Gehalt an freiem Formaldehyd von weniger als 0,5% und eine unendliche Verdünnbarkeit mit Wasser aufweist.

6. Verfahren zur Herstellung eines Harzes, welches Kondensate von Phenol-Formaldehyd und Harnstoff-Formaldehyd enthält, bestehend aus einem Umsetzen des Formaldehyds und des Phenols in einem Molverhältnis F/P von mehr als 1 in Gegenwart eines basischen Katalysators, einem Abkühlen der Reaktionsmischung und einem Umsetzen des Überschusses an Formaldehyd mit dem Harnstoff, dadurch gekennzeichnet, daß vor der Zugabe des Harnstoffes dem Reaktionsmedium ein Amin zugesetzt wird, welches zu der Mannich-Reaktion in der Lage ist.

7. Verfahren gemäß Anspruch 6, dadurch gekennzeichnet, daß man das Phenol und den Formaldehyd in einem Molverhältnis von zwischen 1,8 und 5 umsetzt.

8. Verfahren gemäß einem der Ansprüche 6 oder 7, dadurch gekennzeichnet, daß das Phenol und der Formaldehyd in Gegenwart eines basischen Katalysators umgesetzt werden, dessen Menge 6 bis 20 Moläquivalenten an Hydroxid OH- pro 100 Mol an anfänglichem Phenol entspricht, bei einer Temperatur von zwischen 60°C und 75°C, und vorzugsweise von ungefähr 70°C, bis zum Erreichen eines Umsetzungsgrades von Phenol von gleich oder größer 93%.

9. Verfahren gemäß einem der Ansprüche 6 bis 8, dadurch gekennzeichnet, daß das Amin ein Alkanolamin ist.

10. Verfahren gemäß Anspruch 9, dadurch gekennzeichnet, daß das Amin das Monoethanolamin oder das Diethanolamin ist.

11. Verfahren gemäß einem der Ansprüche 6 bis 10, dadurch gekennzeichnet, daß das Amin in einer Menge von 5 bis 40 Gew.-%, bezogen auf das Gewicht des Phenols zugegeben wird.

12. Verfahren gemäß einem der Ansprüche 6 bis 11, dadurch gekennzeichnet, daß das Amin während des Abkühlens der Reaktionsmischung schrittweise zugegeben wird.

13. Verfahren gemäß einem der Ansprüche 6 bis 11, dadurch gekennzeichnet, daß die Reaktionsmischung bis auf eine Temperatur von zwischen 45°C und 20°C abgekühlt wird, um dann das Amin in der Kälte schrittweise zuzugeben.

14. Verfahren gemäß einem der Ansprüche 6 bis 13, dadurch gekennzeichnet, daß der basische Katalysator Kalk, CaO, das Hydroxid von Natrium, Kalium, Calcium oder Barium, oder Triethylamin ist.

15. Verfahren gemäß einem der Ansprüche 6 bis 14, dadurch gekennzeichnet, daß mit der Zugabe des Harnstoffes begonnen wird, wenn die Reaktionsmischung eine Temperatur von ungefähr 25°C besitzt.

16. Verfahren gemäß Anspruch 15, dadurch gekennzeichnet, daß die Menge an zugegebenem Harnstoff 10 bis 50 Gew.-% entspricht, bezogen auf das Gesamtgewicht an Harz, ausgedrückt als Trockenextrakt.

17. Verfahren gemäß einem der Ansprüche 6 bis 16, dadurch gekennzeichnet, daß vor der Zugabe des Harnstoffes der Ammoniak in einer Menge von 0 bis 100% der Stöchiometrie der Reaktion Formaldehyd-Ammoniak zugegeben wird.

18. Verfahren gemäß einem der Ansprüche 6 bis 17, dadurch gekennzeichnet, daß die Reaktionsmischung vor der Zugabe des Harnstoffes durch Schwefelsäure, Sulfaminsäure, Phosphorsäure oder Borsäure neutralisiert wird.

19. Bindemittelzusammensetzung für Mineralfasern, welche ein Phenolharz gemäß einem der Ansprüche 1 bis 5, den Harnstoff und eventuell Bindemittelzusätze enthält.

20. Bindemittelzusammensetzung gemäß Anspruch 19, welche, ausgedrückt durch Trockenanteile, 50 bis 90 Teile an Harz und 10 bis 50 Teile an Harnstoff enthält.

21. Bindemittelzusammensetzung für Mineralfasern, welche ein Phenolharz gemäß einem der Ansprüche 1 bis 5 und eventuell Bindemittelzusätze enthält.

22. Mineralfasern, welche mit der Bindemittelzusammensetzung gemäß einem der Ansprüche 19 bis 21 gebunden sind, dadurch gekennzeichnet, daß sie zu Herstellung von Dämmaterialien verwendet werden.

23. Mineralfasern, welche mit der Bindemittelzusammensetzung gemäß einem der Ansprüche 19 bis 21 gebunden sind, dadurch gekennzeichnet, daß sie zu Herstellung eines erdlosen Kultursubstrates verwendet werden.

24. Mineralfasern gemäß einem der Ansprüche 22 oder 23, dadurch gekennzeichnet, daß sie stark reduzierte Freisetzungsgrade (taux de relargage) an Phenol und Formaldehyd in der Atmosphäre aufweisen, insbesondere in der Zerfaserungslinie.

25. Mineralfasern gemäß Anspruch 23, dadurch gekennzeichnet, daß die daraus gebildeten Substrate einen stark reduzierten Freisetzungsgrad (taux de relargage) an Formaldehyd in einem wäßrigen Milieu aufweisen.

26. Dämmaterialien, welche aus gebundenen Mineralfasern gemäß dem Anspruch 22 oder 24 erhalten werden.

27. Erdlose Kultursubstrate, welches aus gebundenen Mineralfasern gemäß einem der Ansprüche 23, 24 oder 25 erhalten werden.

28. Erdlose Kultursubstrate gemäß Anspruch 27, dadurch gekennzeichnet, daß wenn die Bindemittelzusammensetzung ein Harz gemäß der Erfindung, dessen Molverhältnis vom Formaldehyd zum Phenol gleich 2,5 beträgt, enthält, der Freisetzungsgrad (taux de relargage) an Formaldehyd weniger als 0,60 Milligramm pro Liter der wäßrigen Lösung, in welche das Substrat eintaucht, beträgt.

## Claims

1. Liquid resin containing phenol-formaldehyde and urea-formaldehyde condensates having a free formaldehyde content which is less than or equal to 3%, the content being expressed as a total liquid weight, and having dilutability in water at 20°C of at least 1000%, characterised in that it also contains a phenol-formaldehydeamine condensate that is to improve the stability, especially the thermal stability, of the resin, the amine being capable of reacting in accordance with the Mannich reaction.

2. Resin according to Claim 1, characterised in that the amine is an alkanolamine.

3. Resin according to Claim 2, characterised in that the amine is monoethanolamine or diethanolamine.

4. Resin according to any one of Claims 1 to 3, characterised in that it has a free formaldehyde content of less than 0.75%, a free phenol content of less than 0.2% and infinite dilutability.

5. Resin according to any one of Claims 1 to 4, characterised in that it has a free phenol content of less than 0.2%, a free formaldehyde content of less than 0.5% and infinite dilutability in water.

6. Process for preparing a resin containing phenol-formaldehyde and urea-formaldehyde condensates, consisting in reacting formaldehyde and phenol in a molar ratio F/P greater than 1 in the presence of a basic catalyst, cooling the reaction mixture and reacting the excess formaldehyde with urea, characterised in that an amine suitable for the Mannich reaction is added to the reaction medium before the urea is added.

7. Process according to Claim 6, characterised in that the phenol and the formaldehyde are reacted in a molar ratio between 1.8 and 5.

8. Process according to either Claim 6 or Claim 7, characterised in that the phenol and the formaldehyde are reacted in the presence of a basic catalyst in an amount corresponding to 6 to 20 moles of hydroxide equivalents OH⁻ per 100 moles of initial phenol at a temperature between 60°C and 75°C and preferably at approximately 70°C until a phenol conversion rate which is equal to or greater than 93% is obtained.

9. Process according to any one of Claims 6 to 8, characterised in that the amine is an alkanolamine.

10. Process according to Claim 9, characterised in that the alkanolamine is monoethanolamine or diethanolamine.

11. Process according to any one of claims 6 to 10, characterised in that the amine is added in an amount of from 5 to 40 weight percent relative to the weight of the phenol.

12. Process according to any one of Claims 6 to 11, characterised in that the amine is gradually added whilst the reaction mixture is being cooled.

13. Process according to any one of Claims 6 to 11, characterised in that the reaction mixture is cooled to a temperature between 45°C and 20°C then the amine is gradually added in the cold state.

14. Process according to any one of Claims 6 to 13, characterised in that the basic catalyst is lime CaO, sodium, potassium, calcium or barium hydroxide or triethylamine.

15. Process according to any one of Claims 6 to 14, characterised in that the addition of the urea is started when the reaction mixture is at a temperature of approximately 25°C.

16. Process according to Claim 15, characterised in that the amount of urea added is from 10 to 50 weight percent relative to the total weight of the resin expressed as dry extract.

17. Process according to any one of Claims 6 to 16, characterised in that ammonia is added in an amount of from 0, to 100% of the stoichiometric amount required by the formaldehyde-ammonia reaction before the urea is introduced.

18. Process according to any one of Claims 6 to 17, characterised in that before urea is added the reaction mixture is neutralised with sulphuric, sulphamic, phosphoric or boric acid.

19. Sizing composition for mineral fibres comprising a phenolic resin according to any one of Claims 1 to 5, urea and optionally sizing additives.

20. Sizing composition according to Claim 19, comprising from 50 to 90 parts of resin and from 10 to 50 parts of urea expressed as parts of dry material.

21. Sizing composition for mineral fibres comprising a phenolic resin according to any one of Claims 1 to 5 and optionally sizing additives.

22. Mineral fibres sized with the sizing composition according to any one of Claims 19 to 21, characterised in that they are used to manufacture insulating products.

23. Mineral fibres sized with the sizing composition according to any one of Claims 19 to 21, characterised in that they are used to manufacture soil-free culture substrates.

24. Mineral fibres according to either Claim 22 or Claim 23, characterised in that the amount of phenol and formaldehyde released into the atmosphere is very low, in particular in a fibre-drawing line.

25. Mineral fibres according to Claim 23, characterised in that the amount of formaldehyde released in an aqueous medium from the substrates formed from the fibres is very low.

26. Insulating products obtained from mineral fibres sized according to Claim 22 or 24.

27. Substrates for soil-free culture obtained from mineral fibres sized according to any one of Claims 23, 24 and 25.

28. Substrates for soil-free culture according to Claim 27, characterised in that when the sizing composition contains a resin according to the invention, of which the molar ratio of formaldehyde with respect to that of phenol is 2.5, the amount of formaldehyde released is less than 0.60 mg per litre of aqueous solution for the immersion of the said substrate.
